# EUROPEAN PATENT SPECIFICATION

(11) **EP 3 560 999 B1**
(45) Date of publication and mention of the grant of the patent: **16.08.2023**
(21) Application number: 17883562.5
(22) Date of filing: 29.11.2017
(51) Int. Cl.: C08L 77/00, C08K 5/25, C08K 5/372, C08L 23/00, F16L 11/08, C08L 77/02, C08K 5/1575

(54) **POLYAMIDE RESIN COMPOSITION FOR HOSE, AND HOSE OBTAINED BY USING POLYAMIDE RESIN COMPOSITION**
POLYAMIDHARZZUSAMMENSETZUNG FÜR SCHLAUCH UND DURCH VERWENDUNG DER POLYAMIDHARZZUSAMMENSETZUNG ERHALTENER SCHLAUCH
COMPOSITION DE RÉSINE DE POLYAMIDE POUR TUYAU, ET TUYAU OBTENU EN UTILISANT LA COMPOSITION DE RÉSINE DE POLYAMIDE

(30) Priority: 22.12.2016 JP 2016248941
(43) Date of publication of application: 30.10.2019
(73) Proprietor: Bridgestone Corporation, Tokyo 104-8340 (JP)
(72) Inventor: KATAOKA, Hisataka, Tokyo 104-8340 (JP)
(74) Representative: Marks & Clerk LLP
(86) International application number: PCT/JP2017/042887
(87) International publication number: WO 2018/116773

(56) References cited:
- EP-A2- 0 382 559
- JP-A- H0 848 867
- JP-A- S4 935 281
- JP-A- S5 222 046
- JP-A- S5 974 156
- JP-A- H02 214 752
- JP-A- H05 262 980
- JP-A- H06 256 650
- JP-A- 2005 320 546
- JP-A- 2006 291 118

## Description

### Technical Field

The present invention relates to a resin composition to be used to produce a hose, and a hose obtained by using that resin composition.

### Background Art

Heretofore, various resins have been used for the production of hoses, and particularly for hoses which require heat resistance, barrier property (shielding property), and the like, polyamide resin compositions are widely used.

In order to improve a refrigerant barrier property , or the like, polyamide compositions which is added with a phenolic antioxidant, a sulfur-based antioxidant and the like are known (paragraphs 0018 and 0035 of Patent Literature 1).

### Prior Art Literature

### Patent Literature

Patent Literature 1: JP 2012-189129

### Summary of Invention

### Problems to be solved by the Invention

However, the polyamide composition as described above has insufficient heat resistance, and for example, in a dry heat aging test at 150°C, the resin was degraded. Thus, such polyamide composition is unsuitable for applications requiring a higher temperature durability standard, such as automotive refrigerant hoses.

In addition, when the hose is connected directly or indirectly to a metal part such as a pipe or a valve, the hose may be degraded by metal ions eluted from the metal part. Thus, it has been difficult to produce a hose combining heat resistance, barrier property, metal resistance, and the like with the conventional polyamide composition.

Accordingly, it is an object of the present invention to provide a polyamide resin composition capable of producing a highly durable hose for various applications, and a hose using thereof.

### Means for Solving the Problem

The above-mentioned object can be achieved by a polyamide resin composition, containing: a polyamide(A); a polyolefin elastomer (B); a phenolic antioxidant (C); a sulfur-based antioxidant (D); and a metal deactivator having a hindered phenol structure (E) (however, (E) is a different substance from (C)), wherein based on 100 parts by weight of the polyamide (A) and the polyolefin elastomer (B) in total, the content of the phenolic antioxidant (C) is 0.2 parts by weight or more, the sulfur antioxidant (D) is 0.2 parts by weight or more, and the metal deactivator (E) is 0.01 parts by weight to 1.5 parts by weight, a compounding ratio (C:D) of the phenolic antioxidant (C) and the sulfur-based antioxidant (D) is 6:1 to 1:6 in weight ratio, and the content of the polyolefin elastomer (B) is 10 to 40 parts by weight based on 100 parts by weight of the polyamide (A) and the polyolefin elastomer (B) in total.

The above-mentioned polyamide composition has excellent barrier property and heat resistance when formed into a molded product, and due to the metal deactivator (E), not only the effect of metal deactivation, but also the preventing oxidation function is improved, and oxidation induction time becomes longer.

Preferred aspects of the polyamide resin composition are as follows.
(1) It is preferred that antioxidants having a semi-hindered phenol structure are used as the phenolic antioxidant (C).
(2) It is preferred to use a polyolefin elastomer (B) at least a part of which is acid-modified.

Further, the above-mentioned object can also be achieved by a hose in which a barrier layer is formed by using the above-mentioned polyamide resin compositions.

### Effects of Invention

By using the polyamide resin composition as described above, a hose having excellent barrier properties, heat resistance, and metal resistance, and a long oxidation induction time can be produced.

### Brief Description of Drawing

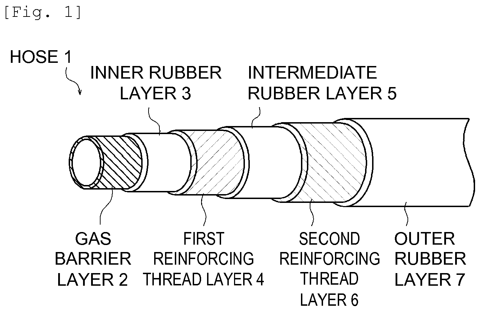

[Fig. 1] Fig. 1 is a schematic perspective view illustrating an example of a hose according to the present invention.

### Description of Embodiments

The present invention relates to a polyamide resin composition containing a polyamide (A), a polyolefin elastomer (B), a phenolic antioxidant (C), a sulfur-based antioxidant (D), and a metal deactivator having a hindered phenol structure (E), and to a hose produced using such a polyamide resin composition.

Hereinafter, embodiments of the present invention are specifically described, but the present invention is not limited to this.

### <Polyamide (A)>

The polyamide that is preferably used is a polyamide containing an amino acid, a lactam, or a diamine and a dicarboxylic acid as main components. Specific examples of these components include lactams such as ε-caprolactam, enantholactam, and ω-laurolactam, amino acids such as ε-aminocaproic acid, 11-aminoundecanoic acid, 12-aminododecanoic acid, diamines such as tetramethylene diamine, hexamethylenediamine, undecamethylenediamine, dodecamethylenediamine, 2,2,4-/2,4,4-trimethylhexamethylenediamine, 5-methylnonamethylenediamine, m-xylylenediamine, p-xylylenediamine, 1,3-bisaminomethylcyclohexane, 1,4-bisaminomethylcyclohexane, bis-p-aminocyclohexylmethane, bis-p-aminocyclohexylpropane and isophorone diamine, and dicarboxylic acids such as adipic acid, suberic acid, azelaic acid, sebacic acid, dodecanedioic acid, 1,4-cyclohexanedicarboxylic acid, 1,3-cyclohexanedicarboxylic acid, terephthalic acid, isophthalic acid, naphthalenedicarboxylic acid, and dimer acid. These components are subjected to polymerization singly or in the form of a mixture of two or more thereof, and the resulting polyamide resin may be either a homopolymer or a copolymer.

Examples of polyamide (A) that are particularly effectively used include polycaproamide (nylon 6), polyhexamethylene adipamide (nylon 66), polytetramethylene adipamide (nylon 46), polyhexamethylene sebacamide (nylon 610), polyundecane amide (nylon 11), polydodecane amide (nylon 12), polyhexamethylene adipamide/hexamethylene terephthalamide copolymer (nylon 66/6T), polycaproamide/polyhexamethylene adipamide copolymer (nylon 6/66). These may be used singly or as a mixture of two or more thereof.

The degree of polymerization of the polyamide is not particularly limited, and any polyamide that has a relative viscosity at 25°C in a 1% by weight concentration sulfuric acid solution (hereinafter sometimes referred to simply as "relative viscosity") in the range of 1.5 to 5.0 may be used. In addition, the terminal group concentration of the polyamide (A) may be adjusted by adding one or more of a monocarboxylic acid compound and/or a dicarboxylic acid compound or a monoamine compound and/or a diamine compound to the polyamide at any stage.

### <Polyolefin elastomer (B)>

The polyolefin elastomer (B) is compounded in the polyamide resin composition. The gas barrier layer composed of the polyamide resin composition can be imparted with flexibility and durability by compounding the polyolefin elastomer (B).

Examples of the polyolefin elastomer (B) include ethylene/butene copolymers, EPRs (ethylene-propylene copolymers), modified ethylene/butene copolymers, EEAs (ethylene-ethyl acrylate copolymers), modified EEAs, modified EPRs, modified EPDMs (ethylene-propylene-diene terpolymers), ionomers, α-olefin copolymers, modified IRs (isoprene rubbers), modified SEBSs (styrene-ethylenebutylene-styrene copolymers), halogenated isobutylene-paramethylstyrene copolymers, ethylene-acrylic acid modified products, ethylene-vinyl acetate copolymers, acid modified products thereof, and mixtures containing these as main components. These may be used singly, or as a mixture of two or more thereof.

As the polyolefin elastomer (B), acid anhydrides such as maleic anhydride, acrylic acid alkyl esters such as glycidyl methacrylate, epoxys and modified products thereof, and the like are particularly preferred, since these can obtain a fine alloy structure in which a polyamide is a base polymer.

If the content of the polyolefin elastomer (B) in the polyamide resin composition is too low, the effect of improving the flexibility and durability due to compounding polyolefin elastomer (B) cannot be sufficiently obtained. If the content is too high, the gas barrier property deteriorates. Therefore, the content of the polyolefin elastomer (B) is 10 to 40 parts by weight, and more preferably 20 to 40 parts by weight, based on 100 parts by weight of the polyamide (A) and the polyolefin elastomer (B) in total. It is not preferred for the content of the polyolefin elastomer (B) in the polyamide resin composition to be too large, because this causes a reversal in the sea phase and the island phase in the below-described sea-island structure, and the gas barrier property significantly deteriorates.

When a modified elastomer, such as an acid-modified elastomer, is used as the polyolefin elastomer (B), an effect which does not require a small specific energy during kneading (dispersion) and a high-level kneading technique, is obtained. However, if the amount thereof compounded is large, gelation of the resin occurs, and during extrusion, appearance defects (fish eyes), such as surface roughening, occur. Therefore, when using a modified elastomer as the polyolefin elastomer (B), the content of the modified elastomer in the polyamide resin composition is 20% by weight or less, and is preferably, for example, 5 to 20% by weight.

In particular, it is preferred to use an acid-modified elastomer of 40 to 100% by weight in the polyolefin elastomer (B) of the polyamide resin composition.

To make the polyamide resin composition and the polyolefin elastomer (B) compatible with each other, that is, to be in a good dispersion state, it is preferred that at least a part of the elastomer is modified with maleic anhydride or the like. An average acid value (acid modification rate) of the whole elastomer used in order to obtain a good dispersion form is preferably 0.8 mg-CH₃ONa/g or more. An upper limit of the acid value is not particularly limited, but is preferably 30 mg-CH₃ONa/g or less, and more preferably 15 mg-CH₃ONa/g or less.

The higher the acid value of the elastomer, the better the dispersion form, but the viscosity of the obtained polyamide resin composition increases with the increase of the acid value, which harms molding processability. For this reason, in order to reduce the increase of the viscosity due to the increase in acid value, the acid value of the elastomer is preferably a value at the low end of the range in which a good dispersion state is obtained. The average acid value of the whole elastomer to be used is preferably 7.5 mg-CH₃ONa/g or less.

Further, even when the average acid value is the same, if the acid value of the modified elastomer included in the elastomer to be used is high, gel-like foreign substances, which are thought to be caused by local overreactions during extrusion, are produced even if the average acid value is reduced by mixing such a modified elastomer with an unmodified elastomer. Therefore, the acid value of the modified elastomer to be used is preferably 30 mg-CH₃ONa/g or less, and more preferably 15.0 mg-CH₃ONa/g or less.

By compounding the polyolefin elastomer (B) into the polyamide resin composition in this way, the flexibility and durability are improved, but it is impossible to avoid a deterioration in the gas barrier property. However, by employing a fine alloy structure of the polyamide and the elastomer, in particular, the island phase of the elastomer disperses in the sea phase of the polyamide, and the polyamide is dispersed in the island phase of the elastomer in the form of scattered dots. As a result of this structure, deterioration of the gas barrier properties due to the compounding of the elastomer can be suppressed, which is preferable.

### <Phenolic antioxidant (C)>

The kind of the antioxidant is not particularly limited, and various antioxidants can be used. However, in view of compatibility with the component (E) described later, the phenolic antioxidant (C) is used.

The phenolic antioxidant (C) is not particularly limited as long as it is different from the component (E). Various phenolic compounds may be used, such as semi-hindered phenols, less-hindered phenols, hindered phenols, phenol acrylates, and bisphenols.

The semi-hindered phenolic antioxidants are phenolic compounds having a bulky substituent at the ortho position, and have a structure of the following general formula (I).

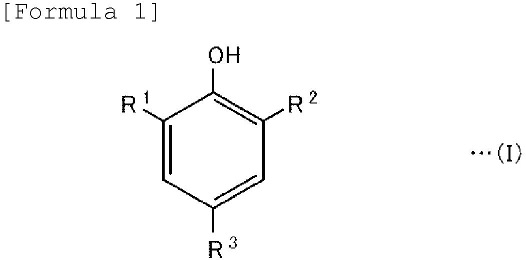

In the above formula, R¹ is a bulkier substituent than R², preferably has 3 or more carbon atoms, and is more preferably a tertiary alkyl group, such as a t-butyl group, or a group containing a hetero atom (O, S, N etc.). R² is an alkyl group, preferably a methyl group. R³ is any substituent, preferably has 3 or more carbon atoms, and is more preferably a hetero atom-containing substituent such as a carbonyl group (-OC-), a carbonyloxy group (-OC-O-), or a thio group (-S-). It is also preferred that R³ has one or more additional semi-hindered phenol structures (e.g., bis-semi-hindered phenol).

More specific examples include 3,9-bis{2-[3-(3-tert-butyl-4-hydroxy-5-methylphenyl)propionyloxy]-1,1-dimethylethyl}-2,4,8,10-tetraoxaspiro[5.5]undecane (ADK STAB AO-80 manufactured by Adeka), bis[3-(1,1-dimethylethyl)-4-hydroxy-5-methyl benzenepropionic acid]ethylene bis(oxy-2,1-ethandiyl) (IRGANOX 245, manufactured by BASF), 4,6-bis(octylthiomethyl)-o-cresol (IRGANOX 1520 L, manufactured by BASF), 6-[3-(3-t-butyl-4-hydroxy-5)-methylphenyl)propoxy]-2,4,8,10-tetra-t-butyldibenzo[d,f][1,3,2]dioxaphosphepin (SUMILIZER GP, manufactured by Sumitomo Chemical), tris(4-t-butyl-3-hydroxy-2,6'-dimethylbenzyl)-s-triazine-2,4,6-(1H,3H,5H)trione (KEMINOX 179, manufactured by Chemipro Kasei), 2,2'-methylene bis(4-ethyl-6-tert-butylphenol) (KEMINOX 9425, manufactured by Chemipro Kasei), and the like.

Other examples of the phenolic antioxidant (C) include: one or more less-hindered phenols selected from the group consisting of 4,4',4"-(1-methylpropanyl-3-ylidene)tris(6-tert-butyl-m-cresol) (ADK STAB AO-30, manufactured by Adeka), and 6,6'-di-tert-butyl-4,4'-butylidenedi-m-cresol (ADK STAB AO-40, manufactured by Adeka); one or more hindered phenols selected from the group consisting of 1,3,5-tris(3,5-di-tert-butyl-4-hydroxybenzyl)-1,3,5-triazine-2,4,6(1H,3H,5H)-trione (ADK STAB AO-20, manufactured by Adeka), pentaerythritol tetrakis[3-(3,5-di-tert-butyl-4-hydroxyphenyl)propionate] (ADK STAB AO-60, manufactured by Adeka), 1,3,5-trimethyl-2,4,6-tris(3,5-di-tert-butyl-4-hydroxybenzyl)-benzene (ADK STAB AO-330, manufactured by Adeka), 3,5-bis(1,1-dimethylethyl)-4-hydroxy-C7-C9 branched alkyl ester benzenepropanoic acid (IRGANOX 1135, manufactured by BASF), bis[monoethyl(3,5-di-tert-butyl-4-hydroxybenzyl)phosphonate]calcium (IRGANOX 1425WL, manufactured by BASF), hexane-1,6-diyl bis(3-(3,5-di-tert-butyl-4-hydroxyphenyl)propanate (IRGANOX 259, manufactured by BASF), diethyl[[3,5-bis(1,1-dimethylethyl)-4-hydroxyphenyl]methyl]phosphonate (IRGAMOD 295, manufactured by BASF), and N,N'-hexane-1,6-diyl bis[3-(3,5-di-tert-butyl-4-hydroxyphenyl)propionamide] (IRGANOX 1098, manufactured by BASF); one or more phenol acrylates selected from the group consisting of 2-[1-(2-hydroxy-3,5-di-tert-pentylphenyl)ethyl]-4,6-di-tert-pentylphenylacrylate (SUMILIZER GS, manufactured by Sumitomo Chemical), and 2-tert-butyl-6-(3-tert-butyl-2-hydroxy-5-methylbenzyl)-4-methylphenyl acrylate (SUMILIZER GM, manufactured by Sumitomo Chemical); and bisphenols such as 4,4'-butylidene bis(6-tert-butyl-3-methylphenol) (SUMILIZER BBM-S, manufactured by Sumitomo Chemical).

Among the above-mentioned phenolic antioxidants, semi-hindered phenol-based antioxidants are most preferred, because they have less steric hindrance and high reactivity.

These phenolic antioxidants (C) may be used alone, or as a mixture of two or more thereof. However, the amount of all the phenolic antioxidants (C) added is 0.2 parts by weight or more based on 100 parts by weight of the polyamide (A) and the polyolefin elastomer (B) in total. The upper limit of the amount added is not particularly limited, but the amount of all the phenolic antioxidants (C) added is, preferably 3 parts by weight or less, more preferably 0.3 parts by weight to 1 part by weight, and particularly preferably 0.4 parts by weight to 0.8 parts by weight, based on 100 parts by weight of the polyamide (A) and the polyolefin elastomer (B) in total. Further, the antioxidant (D) described below, which is different from the phenolic antioxidant (C), is also used.

### <Sulfur-based antioxidant (D)>

The sulfur-based antioxidant (D) is not particularly limited, but organic sulfur compounds are preferable, and one or more kinds of various thio compounds, such as thioether compounds, mercaptobenzimidazole compounds, dithiocarbamic acid compounds, and thiourea compounds can be used. More preferably, the sulfur-based antioxidant (D) is a thioether compound.

Specific examples include pentaerythritol tetrakis(3-laurylthiopropionate) (ADK STAB AO-412S, manufactured by Adeka), dioctadecyl 3,3'-thiodipropionate (IRGANOX PS802FL, manufactured by BASF), di(tridecyl)3,3'-thiodipropionate (ADK STAB AO-503, manufactured by Adeka), 2-mercaptobenzimidazole (SUMILIZER MB, manufactured by Sumitomo Chemical), dilaurylthiodipropionate, ditridecylthiodipropionate, dimyristyl thiodipropionate, distearylthiodipropionate, pentaerythritol-tetrakis(3-octadecylthiopropionate), and pentaerythritol-tetrakis(3-myristyl thiopropionate).

The above-mentioned sulfur-based antioxidants (D) may be used alone as a single kind, or as a mixture of two or more. However, in any case, the amount of all the sulfur-based antioxidants (D) added is 0.2 parts by weight or more based on 100 parts by weight of the polyamide (A) and the polyolefin elastomer (B) in total. If the amount added is too large, clogging tends to occur due to pellets adhering to the screw inlet when the composition is melted, and the moldability is poor. Therefore, the amount of the sulfur-based antioxidant (D) added is, preferably 3.0 parts by weight or less, more preferably 0.3 parts by weight to 1 part by weight, and more preferably 0.4 parts by weight to 0.8 parts by weight, based on 100 parts by weight of the polyamide (A) and the polyolefin elastomer (B) in total.

In order to effectively extend the oxidation induction time, the compounding ratio (C:D) of the phenolic antioxidant (C) and the sulfur-based antioxidant (D) is 1:6 to 6:1, more preferably 5:2 to 2:5, and particularly preferably the ratio (C:D) is 2:1 to 2:5.

### < (E) Hindered phenol metal deactivator>

The hindered phenol metal deactivator (E) is a phenolic compound having a hindered phenol structure, and is a substance different from the above-mentioned component (C). Generally, the hindered phenol metal deactivator (E) has a structure represent by the following formula (II):

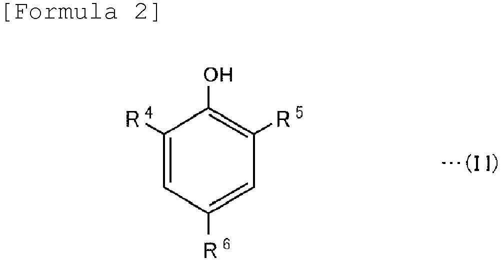

In the above formula, R⁴ and R⁵ are the same or different bulky substituents, preferably has 3 or more carbon atoms, and more preferably are tertiary alkyl groups such as a t-butyl group, but may be a substituent having a hetero atom (O, S, N, etc.). Most preferably, R⁴ and R⁵ are both t-butyl groups.

R⁶ is an optional substituent, but preferably has one or more additional hindered phenol structures, and is represented by, for example, the following formula (III).

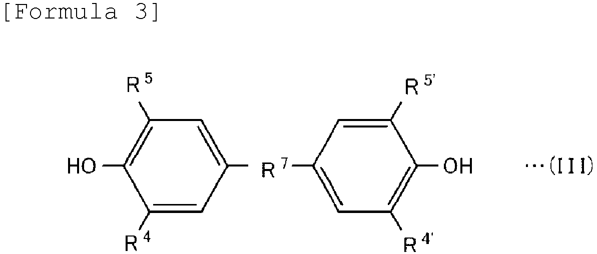

In the above formula (III) and the following formula (IV), R⁴, R⁵, R⁴' , and R⁵' are the same or different bulky substituents, preferably have 3 or more carbon atoms, and more preferably are tertiary alkyl groups such as a t-butyl group, but may be a substituent having a hetero atom (O, S, N, etc.). Most preferably, all of R⁴, R⁵, R⁴', and R⁵' are t-butyl groups.

R⁷ is not particularly limited, and may be a carbon chain such as an alkylene or an alkyne, but one or more hetero atoms such as O, N, or S may be inserted or substituted. More preferable specific examples are represented by the following formula (IV).

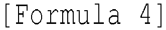

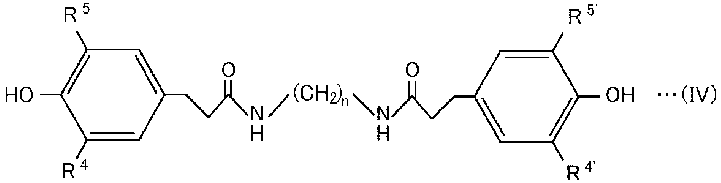

In the above formula, n is zero or integer of 10 or less, and preferably n is zero or an integer of 1 or more and 6 or less.

These hindered phenolic metal deactivator (E) may be used alone as a single kind, or as a mixture of two or more. However, the amount of all the hindered phenolic metal deactivators (E) added is, 0.01 parts by weight to 1.5 parts by weight, preferably 0.05 parts by weight to 1 part by weight, and more preferably 0.05 parts by weight to 0.5 parts by weight, based on 100 parts by weight of the polyamide (A) and the polyolefin elastomer (B) in total.

If the amount of the hindered phenolic metal deactivator (E) added is too small, durability when connecting the hose to a metal part becomes extremely low, and the oxidation induction time also becomes short. If the amount of the hindered phenolic metal deactivator (E) added is too large, compatibility decreases and a bleed-out problem also occurs.

### <Other ingredients>

In the polyamide resin composition, one or more kinds of other additives, namely, lubricants, antistatic agents, acid acceptors, resin components other than (A) and (B), coloring agents, anti-aging agents, nucleating agents, fillers, reinforcing agents, heat resistance agents, light resistance agents, antioxidants other than (C) and (D), and the like may also be added.

Although the hose obtained by using the above-mentioned polyamide resin composition and the production method thereof are not specifically limited, an example is described below.

### <Hose and production method thereof>

The above-mentioned polyamide resin composition has excellent barrier properties, heat resistance, and the like, and hence is used in a hose for transporting various substances, such as liquids and gases. This polyamide resin composition is suitable for a gas barrier layer of a hose for transporting gases such as refrigerant gases and gaseous fuels is particularly suitable for multi-layer hoses in which one or more other layers are laminated on the gas barrier layer, and is most suitable for multi-layer hoses for refrigerant transportation.

The refrigerants to be transported by the hose are not particularly limited, but one or more refrigerants selected from the group consisting of 1,1,1,2-tetrafluoroethane, 2,3,3,3-tetrafluoropropene, dichlorodifluoromethane, and 1,1-difluoroethane can be used. More desirably, at least one of 1,1,1,2-tetrafluoroethane and 2,3,3,3-tetrafluoropropene is used as the refrigerant. Although in some cases other components, for example oils such as PAG (polyalkylene glycol), may be mixed in the refrigerant, such refrigerants can also be transported by the hose.

In Fig. 1, reference numeral 1 indicates a specific example of the hose. The hose 1 is a hose for transporting a refrigerant. Although the production method thereof is not particularly limited, in general, the polyamide resin composition as described above is melted, and the molten product is extruded onto a mandrel (tube type) to form a gas barrier layer 2.

The gas barrier layer 2 preferably has a thick thickness in consideration of the barrier property, but if it is too thick, flexibility is reduced. Accordingly, the thickness of the gas barrier layer 2 is preferably 50 µm to 400 µm, and more preferably 150 µm to 350 µm.

In the case of a multilayer structure, generally, one or more of any of rubber layers 3, 5 and 7 and reinforcing thread layers 4 and 6 are laminated on the gas barrier layer 2. Moreover, the rubber layers may be provided inside the gas barrier layer 2. Here, an inner rubber layer 3, a first reinforcing thread layer 4, an intermediate rubber layer 5, the second reinforcing thread layer 6, and an outer rubber layer 7 are formed in that order on the outer periphery of the gas barrier layer 2.

The reinforcing thread layers 4 and 6 are not particularly limited, and commonly used reinforcing threads may be used. Generally, polyester, wholly aromatic polyester, nylon, vinylon, rayon, aramid, polyarylate, polyethylene naphthalate, and mixed threads of these are used, and these reinforcing threads are formed by melting and winding into a spiral shape.

The number of layers of the reinforcing thread layers 4 and 6 is not limited to two, and may be one or three or more. However, in the case of providing a plurality of reinforcing thread layers 4 and 6, it is preferred that the spiral direction be opposite to that of the adjacent other reinforcing thread layer 4 and 6.

As the rubber constituting the rubber layers 3, 5, and 7, generally, butyl rubbers (IIRs), chlorinated butyl rubbers (C1-IIRs), chlorinated polyethylenes, chlorosulfonated polyethylenes, brominated butyl rubbers (Br-IIRs), isobutylene-bromo paramethyl styrene copolymers, EPRs (ethylene-propylene copolymers), EPDMs (ethylene-propylene-diene terpolymers), NBRs (acrylonitrile butadiene rubbers), CRs (chloroprene rubbers), hydrogenated NBRs, acrylic rubbers, ethylene acrylic rubbers (AEMs), blends of two or more of these rubbers, or a blend with a polymer having these rubbers as a main component may be used. Preferably, a butyl rubber or an EPDM rubber is used. Compounded formulations of commonly used fillers, processing aids, anti-aging agents, vulcanizing agents, vulcanization accelerators and the like can be applied in these rubbers.

The rubber used for these rubber layers 3, 5, and 7 may be the same or different, but for the intermediate rubber layer 5, it is preferred to use a rubber having good contact properties with the inner rubber layer 3 and the outer rubber layer 7.

From the perspective of flexibility, the thickness of the inner rubber layer 3 is preferably about 0.5 to 4 mm. The thickness of the intermediate rubber layer 5 is preferably about 0.1 to 0.6 mm, and the thickness of the outer rubber layer 7 is preferably about 0.5 to 2 mm.

These rubber layers 3, 5, and 7 may be adhered onto the gas barrier layer 2 via an adhesive, or formed by laminating a molten rubber and then vulcanizing at 140°C to 170°C for about 30 minutes to 120 minutes. In either case, if the additive components elute (bleed-out) from the gas barrier layer 2, the adhesion reaction activity may deteriorate and impair adhesion, or can cause interfacial peeling between the gas barrier layer 2 and the adjacent inner rubber layer 3.

The polyamide resin composition described above has a high level of compatibility due to the combination of the additives (C), (D), and (E), and bleed-out hardly occurs. As a result, adhesion of the rubber layer 3 is not inhibited, and the rubber layer 3 does not easily peel from the gas barrier layer 2. Moreover, metal ions are captured by the metal deactivator (E), so durability is high when the hose 1 is connected to metal products such as pipes, fittings and valves. Furthermore, the metal deactivator (E) itself also has a function of preventing oxidation, and as a result of that the oxidation induction time can be extended.

### Examples

### -Production of sheet

A nylon resin, an elastomer, and additives were compounded in the amounts shown in Tables 1 to 3 below, and the obtained mixtures were melt-kneaded using a twinscrew kneader manufactured by Toyo Seiki Seisakusho to obtain resin pellets. Then, using a T-die molding machine manufactured by Toyo Seiki Seisakusho, resin sheets having a thickness of 0.35 mm were obtained. The following evaluation tests were performed by using these resin sheets.

### -Oxidation induction time (OIT)

The oxidation induction time (OIT) was measured using an automatic differential scanning calorimeter "DSC-60A" manufactured by Shimadzu Corporation under a temperature condition of 220°C. Here, the oxidation induction time is defined as the time taken until heat is generated after oxygen is introduced.

### -Heat-aging resistance test

A 0.35 mm-thick resin sheet was punched into a dumbbell piece for tensile testing to make a sample, and the sample was suspended in an oven set at 150°C. Evaluation was carried out by subjecting the sample after 336 hours had elapsed (after an aging treatment) to a fracture test at a tensile rate of 100 mm/min, and measuring the tensile elongation at break as the test item. The results are expressed as the deterioration rate of the measured value after aging relative to a value of 100% for the measured value of the same test item before aging. The composition of the compositions of the Examples and Comparative Examples and the results of the evaluation tests are shown in Tables 1 to 3 below.

### -Bleed-out evaluation

A PET film was pasted on the front and back of a sheet-like molded article having a square planar shape (50 mm square, 0.35 mm thick) to make a test piece, and this test piece was placed in a thermostatic chamber with a temperature of 40°C and a relative humidity of 90%. The test piece was left to stand for 60 days, during which time visual observation and feeling by touch were conducted over time to check for the presence or absence of additives that had bled out.

The evaluation of bleed-out was carried out as follows. Test pieces in which bleed-out occurred after 30 days from the start of leaving the test piece to stand, but which were acceptable for short-term use, were evaluated as OK (good). Test pieces in which bleed-out occurred after 10 days from the start of leaving the test piece to stand, but before 30 days from the start of leaving the test piece to stand, were evaluated as NG (not good). Test pieces in which bleed-out occurred before 10 days from the start of leaving the test piece to stand were evaluated as BAD (defective), and test pieces in which bleed-out had not occurred even after 60 days from the start of leaving the test piece to stand were evaluated as Ex (excellent).

### [Table 1]

**Table 1: Composition and Evaluation Test Results**

| Compounding Ingredient | No. | | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 |
|---|---|---|---|---|---|---|---|---|---|---|---|---|---|---|---|---|---|
| Polyamide | Nylon 6 | | 65 | 65 | 65 | 65 | 65 | 65 | 65 | 65 | 65 | 65 | 65 | 65 | 65 | 65 | 65 |
| Elastomer | TAFMER 1050S (not modified) | | 17.5 | 17.5 | 17.5 | 17.5 | 17.5 | 17.5 | 17.5 | 17.5 | 17.5 | 17.5 | 17.5 | 17.5 | 17.5 | 17.5 | 17.5 |
| | TAFMER 7010 (modified) | | 17.5 | 17.5 | 17.5 | 17.5 | 17.5 | 17.5 | 17.5 | 17.5 | 17.5 | 17.5 | 17.5 | 17.5 | 17.5 | 17.5 | 17.5 |
| Antioxidant | ADK STAB AO-80 semi-hindered phenol | | 0.5 | 0.3 | 0.2 | 0.3 | 0.2 | 0.2 | 0.3 | 1.0 | 3.0 | 5.0 | 0.5 | 0.5 | 0.5 | 0.5 | 0.5 |
| | ADK STAB AO-30 less-hindered phenol | | 0 | 0 | 0 | 0 | 0 | 0 | 0 | 0 | 0 | 0 | 0 | 0 | 0 | 0 | 0 |
| | AO-60 hindered phenol | | 0 | 0 | 0 | 0 | 0 | 0 | 0 | 0 | 0 | 0 | 0 | 0 | 0 | 0 | 0 |
| | ADK STAB AO-412S sulfur-based antioxidant | | 0.5 | 0.3 | 0.3 | 0.2 | 0.4 | 0.5 | 05 | 0.5 | 0.5 | 0.5 | 0.2 | 0.3 | 1.0 | 30 | 5.0 |
| Metal Deactivator | ADK STAB CDA-10 hindered phenol type | | 0.2 | 0.2 | 0.2 | 0.2 | 0.2 | 0.2 | 0.2 | 0.2 | 0.2 | 0.2 | 0.2 | 0.2 | 0 2 | 0.2 | 0.2 |
| | ADK STAB CDA-6 | | 0 | 0 | 0 | 0 | 0 | 0 | 0 | 0 | 0 | 0 | 0 | 0 | 0 | 0 | 0 |
| | ADK STAB CDA-1 | | 0 | 0 | 0 | 0 | 0 | 0 | 0 | 0 | 0 | 0 | 0 | 0 | 0 | 0 | 0 |
| Phenol:sulfur-based antioxidant compounding ratio | | | 1:1 | 1:1 | 2:3 | 3:2 | 1:2 | 2:5 | 3:5 | 2:1 | 6:1 | 10:1 | 5:2 | 5:3 | 1:2 | 1:6 | 1:10 |
| Evaluation | Oxidation induction time (220°C) | minutes | 35.2 | 15.6 | 12.0 | 11.5 | 14.2 | 17.7 | 23.3 | 55 | >60 | >60 | 22.9 | 25.7 | 42 | >60 | >60 |
| | Elongation retention after heat aging | % | 98 | 88 | 85 | 83 | 79 | 88 | 90 | 95 | 95 | 95 | 92 | 94 | 91 | 95 | 95 |
| | Bleed-out | | EX | EX | EX | EX | EX | EX | EX | EX | OK | BAD | EX | EX | EX | OK | BAD |

### [Table 2]

**Table 2: Composition and Evaluation Test Results**

| Compounding Ingredient | No. | | Example 15 | Example 17 | Example 18 | Example 19 | Example 20 | Comparative Example 1 | Comparative Example 2 | Example 21 | Example 22 |
|---|---|---|---|---|---|---|---|---|---|---|---|
| Polyamide | Nylon 6 | | 65 | 65 | 65 | 65 | 65 | 65 | 65 | 65 | 65 |
| Elastomer | TAFMER 1050S (not modified) | | 17.5 | 17.5 | 17.5 | 17.5 | 17.5 | 17.5 | 17.5 | 17.5 | 17.5 |
| | TAFMER 7010 (modified) | | 17.5 | 17.5 | 17.5 | 17.5 | 17.5 | 17.5 | 17.5 | 17.5 | 17.5 |
| Antioxidant | ADK STAB AO-80 semi-hindered phenol | | 0.5 | 0.5 | 0.5 | 0.5 | 0.5 | 0 | 0.5 | 0 | 0 |
| | ADK STAB AO-30 less-hindered phenol | | 0 | 0 | 0 | 0 | 0 | 0 | 0 | 0.5 | 0 |
| | AO-60 hindered phenol | | 0 | 0 | 0 | 0 | 0 | 0 | 0 | 0 | 0.5 |
| | ADK STAB AO-412S sulfur-based antioxidant | | 0.5 | 0.5 | 0.5 | 0.5 | 0.5 | 0.5 | 0 | 0.5 | 0.5 |
| Metal Deactivator | ADK STAB CDA-10 hindered phenol type | | 0.01 | 0.05 | 0.5 | 1.0 | 1.5 | 0.2 | 0.2 | 0.2 | 0.2 |
| | ADK STAB CDA-6 | | 0 | 0 | 0 | 0 | 0 | 0 | 0 | 0 | 0 |
| | ADK STAB CDA-1 | | 0 | 0 | 0 | 0 | 0 | 0 | 0 | 0 | 0 |
| Phenol:sulfur-based antioxidant compounding ratio | | | 1:1 | 1:1 | 1:1 | 1:1 | 1:1 | - | - | 1:1 | 1:1 |
| Evaluation | Oxidation induction time (220°C) | minutes | 31.4 | 32.8 | 40.5 | 51.3 | >60 | 7.5 | 10.5 | 22.4 | 18.8 |
| | Elongation retention after heat aging | % | 92 | 92 | 97 | 98 | 95 | 30 | 35 | 85 | 80 |
| | Bleed-out | | EX | EX | EX | EX | OK | EX | EX | EX | EX |

### [Table 3]

**Table 3: Composition and Evaluation Test Results**

| Compounding Ingredient | No. | | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 | Comparative Example 13 | Comparative Example 14 |
|---|---|---|---|---|---|---|---|---|---|---|---|---|---|---|
| Polyamide | Nylon 6 | | 65 | 65 | 65 | 65 | 65 | 65 | 65 | 65 | 65 | 65 | 65 | 65 |
| Elastomer | TAFMER 1050S (not modified) | | 17.5 | 17.5 | 17.5 | 17.5 | 17.5 | 17.5 | 17.5 | 17.5 | 17.5 | 17.5 | 17.5 | 17.5 |
| | TAFMER 7010 (modified) | | 17.5 | 17.5 | 17.5 | 17.5 | 17.5 | 17.5 | 17.5 | 17.5 | 17.5 | 17.5 | 17.5 | 17.5 |
| Antioxidant | ADK STAB AO-80 semi-hindered phenol | | 0.3 | 0.5 | 0.3 | 0.5 | 0 | 0 | 0 | 0 | 0 | 0 | 0.1 | 0.1 |
| | ADK STAB AO-30 less-hindered phenol | | 0 | 0 | 0 | 0 | 0.5 | 0 | 0 | 0 | 0 | 0 | 0 | 0 |
| | AO-60 hindered phenol | | 0 | 0 | 0 | 0 | 0 | 0.5 | 0 | 0 | 0 | 0 | 0 | 0 |
| | ADK STAB AO-412S sulfur-based antioxidant | | 0.1 | 0.1 | 0.1 | 0 | 0 | 0 | 0.5 | 0 | 0 | 0 | 0.3 | 0.5 |
| Metal Deactivator | ADK STAB CDA-10 hindered phenol type | | 0 | 0 | 0 | 0 | 0 | 0 | 0 | 0.2 | 0 | 0 | 0 | 0 |
| | ADK STAB CDA-6 | | 0.2 | 0.2 | 0 | 0 | 0 | 0 | 0 | 0 | 0.2 | 0 | 0.2 | 0.2 |
| | ADK STAB CDA-1 | | 0 | 0 | 0.2 | 0 | 0 | 0 | 0 | 0 | 0 | 0.2 | 0 | 0 |
| Phenol:sulfur-based antioxidant compounding ratio | | | 3:1 | 5:1 | 3:1 | - | - | - | - | - | - | - | 1:3 | 1:5 |
| Evaluation | Oxidation induction time (220°C) | minutes | 6.5 | 8.8 | 5.5 | 5. 7 | 2.8 | 1.7 | 1.2 | 2.9 | 1.1 | 0.5 | 7.0 | 9.5 |
| | Elongation retention after heat aging | % | 22 | 35 | 20 | 25 | 10 | 22 | 15 | 15 | 10 | 2 | 6 | 25 |
| | Bleed-out | | EX | EX | EX | EX | EX | EX | EX | EX | EX | EX | EX | EX |

In addition, no test samples were evaluated as an NG regarding the bleed-out. The materials listed in the above Tables 1 to 3 above are as follows.

### Polyamide: Nylon 6

Elastomer: TAFMER A-1050S (unmodified ethylene/butene copolymer) and TAFMER MH7010 (maleic acid-modified α-olefin polymer (ethylene-butene copolymer)), manufactured by Mitsui Chemicals
Antioxidant: ADK STAB AO-80 (semi-hindered phenol), ADK STAB AO-30 (less-hindered phenol), AO-60 (hindered phenol), and ADK STAB AO-412S (sulfur-based antioxidant), manufactured by Adeka
Metal deactivator: ADK STAB CDA-10 (hindered phenol type), ADK STAB CDA-6, and ADK STAB CDA-1 (CDA-6 and CDA-1 are both phenolic metal antioxidants that do not have a bulky substituent, i.e., are not hindered phenols), manufactured by Adeka.

It can be seen from the above Tables 1 to 3 that in each of the examples the oxidation induction time was sufficiently long, and the elongation retention after heat aging was also high. In comparative

Examples 10 and 15, good results were obtained for both the oxidation induction time and the elongation retention after heat aging, but bleed-out was confirmed. When the barrier layer 2 is adhered to the rubber layer 3 through an adhesive like in a multi-layered hose, particularly an air-conditioner hose, the additives that have bled out may move to the adhesive layer and impair adhesion or cause interfacial peeling. The impact of such bleeding out is therefore large, and it was confirmed that when the compositions of comparative

Examples 10 and 15 were somewhat unsuitable were used the hose employed a multilayer structure.

### Reference Signs List

- 1: Hose
- 2: Gas barrier layer
- 3, 5, 7: Rubber layers
- 4, 6: Reinforcing thread layers

## Claims

1. A polyamide resin composition for a hose, the polyamide resin composition containing:
a polyamide(A);
a polyolefin elastomer (B);
a phenolic antioxidant (C);
a sulfur-based antioxidant (D); and
a metal deactivator having a hindered phenol structure (E), wherein
the phenolic antioxidant (C) is a different substance from the metal deactivator having a hindered phenol structure (E),
the content of the phenolic antioxidant (C) is 0.2 parts by weight or more, the sulfur-based antioxidant (D) is 0.2 parts by weight or more, and the metal deactivator (E) is 0.01 parts by weight to 1.5 parts by weight, based on 100 parts by weight of the polyamide (A) and the polyolefin elastomer (B) in total,
a compounding ratio (C:D) of the phenolic antioxidant (C) and the sulfur-based antioxidant (D) is 6:1 to 1:6 in weight ratio, and
the content of the polyolefin elastomer (B) is 10 to 40 parts by weight based on 100 parts by weight of the polyamide (A) and the polyolefin elastomer (B) in total.

2. The polyamide resin composition according to claim 1, wherein the phenolic antioxidant (C) has a structure of the following general formula (I), 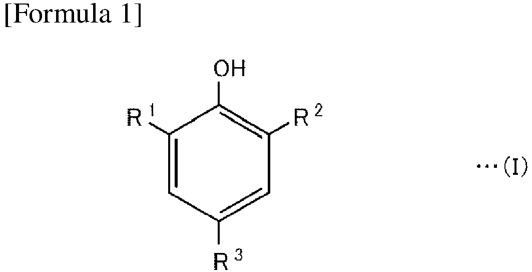 wherein R¹ is a bulkier substituent than R², R² is an alkyl group, and R³ is any substituent.

3. The polyamide resin composition according to claim 1 or 2, wherein at least a part of the polyolefin elastomer (B) is acid-modified.

4. A hose comprising a barrier layer formed by using the polyamide resin composition according to any one of claims 1 to 3.

## Patentansprüche

1. Polyamidharzzusammensetzung für einen Schlauch, wobei die Polyamidharzzusammensetzung enthält:
ein Polyamid (A);
ein Polyolefin-Elastomer (B);
ein phenolisches Antioxidationsmittel (C);
ein schwefelbasiertes Antioxidationsmittel (D) und
einen Metalldeaktivator mit einer sterisch gehinderten Phenolstruktur (E), wobei
das phenolische Antioxidationsmittel (C) eine von dem Metalldeaktivator mit einer sterisch gehinderten Phenolstruktur (E) unterschiedliche Substanz ist,
der Gehalt des phenolischen Antioxidationsmittels (C) 0,2 Gewichtsteile oder mehr beträgt, des schwefelbasierten Antioxidationsmittels (D) 0,2 Gewichtsteile oder mehr beträgt und des Metalldeaktivators (E) 0,01 Gewichtsteile bis 1,5 Gewichtsteile beträgt, bezogen auf 100 Gewichtsteile des Polyamids (A) und des Polyolefin-Elastomers (B) insgesamt,
ein Compoundierungsverhältnis (C:D) des phenolischen Antioxidationsmittels (C) und des schwefelbasierten Antioxidationsmittels (D) 6:1 bis 1:6 im Gewichtsverhältnis beträgt und
der Gehalt des Polyolefin-Elastomers (B) 10 bis 40 Gewichtsteile beträgt, bezogen auf 100 Gewichtsteile des Polyamids (A) und des Polyolefin-Elastomers (B) insgesamt.

2. Polyamidharzzusammensetzung nach Anspruch 1, wobei das phenolische Antioxidationsmittel (C) eine Struktur der folgenden allgemeinen Formel (1) aufweist, 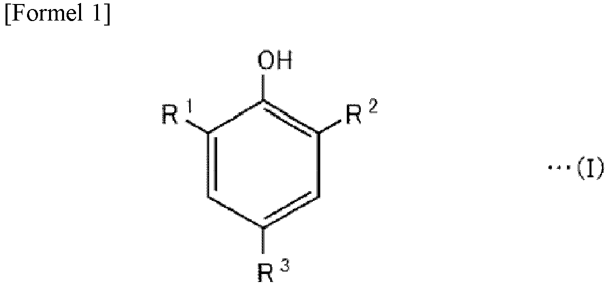 wobei R¹ ein massigerer Substituent als R² ist, R² eine Alkylgruppe ist und R³ ein beliebiger Substituent ist.

3. Polyamidharzzusammensetzung nach Anspruch 1 oder 2, wobei mindestens ein Teil des Polyolefin-Elastomers (B) säuremodifiziert ist.

4. Schlauch, umfassend eine Barriereschicht, die durch Verwenden der Polyamidharzzusammensetzung nach einem der Ansprüche 1 bis 3 gebildet wird.

## Revendications

1. Composition de résine polyamide pour un tuyau, la composition de résine polyamide contenant :
un polyamide (A) ;
un élastomère de polyoléfine (B) ;
un antioxydant phénolique (C) ;
un antioxydant à base de soufre (D) ; et
un désactivateur métallique ayant une structure de phénol à encombrement stérique (E), dans laquelle
l'antioxydant phénolique (C) est une substance différente du désactivateur métallique ayant une structure de phénol à encombrement stérique (E),
la teneur en antioxydant phénolique (C) est de 0,2 partie en poids ou plus, de l'antioxydant à base de soufre (D) est de 0,2 partie en poids ou plus et du désactivateur métallique (E) est de 0,01 partie en poids à 1,5 parties en poids, sur la base de 100 parties en poids du polyamide (A) et de l'élastomère de polyoléfine (B) au total,
le rapport de mélange (C :D) de l'antioxydant phénolique (C) et de l'antioxydant à base de soufre (D) est de 6:1 à 1:6 en rapport en poids, et
la teneur en élastomère de polyoléfine (B) est de 10 à 40 parties en poids sur la base de 100 parties en poids du polyamide (A) et de l'élastomère de polyoléfine (B) au total.

2. Composition de résine polyamide selon la revendication 1, dans laquelle l'antioxydant phénolique (C) a une structure de formule générale (I) suivante, 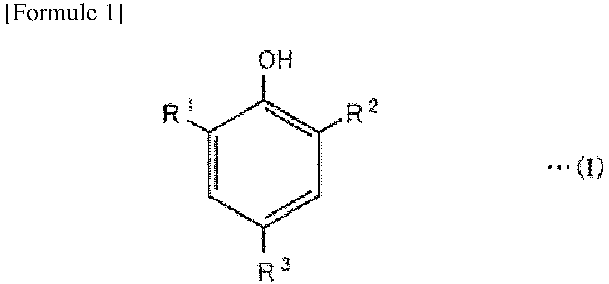 dans laquelle R¹ est un substituant plus volumineux que R², R² est un groupe alkyle et R³ est un substituant quelconque.

3. Composition de résine polyamide selon la revendication 1 ou 2, dans laquelle au moins une partie de l'élastomère de polyoléfine (B) est modifiée par un acide.

4. Tuyau comprenant une couche barrière formée en utilisant la composition de résine polyamide selon l'une quelconque des revendications 1 à 3.
